# EUROPEAN PATENT SPECIFICATION

(11) **EP 0 544 884 B1**
(45) Date of publication and mention of the grant of the patent: **24.03.1999**
(21) Application number: 92913413.8
(22) Date of filing: 22.06.1992
(51) Int. Cl.: H04Q 7/24

(54) **SPEECH SIGNAL TRANSMISSION**
SPRACHSIGNALUEBERTRAGUNG
TRANSMISSION D'UN SIGNAL TELEPHONIQUE

(30) Priority: 21.06.1991 GB 91135152
(43) Date of publication of application: 09.06.1993
(73) Proprietor: MARCONI COMMUNICATIONS LIMITED, Coventry, CV3 1HJ (GB)
(72) Inventor: MUNK, Herbert, Georg, Coventry CV3 3AD (GB)
(74) Representative: Branfield, Henry Anthony
(86) International application number: GB9201131
(87) International publication number: WO9300778

(56) References cited:
- WO-A-91/15087
- 41TH VEHICULAR TECHNOLOGY CONFERENCE May 1991, ST LOUIS US pages 326 - 332 PAUTET ET AL. 'GSM Protocol architecture: radio sub-system signalling'
- BRITISH TELECOMMUNICATIONS ENGINEERING vol. 8, no. 2, July 1989, LONDON GB pages 14 - 19 ALTEHAGE 'Open Network Provision: Concepts and Technical Realisation Proposals for the Network of the Deutsche Bundespost Telekom'

## Description

The present invention concerns the transmission of speech and is particularly concerned with mobile telephone services. The basic format for a network for mobile speech services will comprise the actual mobile handsets, a base station with which the handsets communicate via a radio link, a mobile switching centre (MSC) connected to the base station, and a public network, possibly including the PSTN, to which the MSC is connected. There will of course normally be many handsets associated with each base station, and each MSC will be linked to a number of base stations.

There has been an explosive growth in the provision of mobile telephone services in the U.K. and this growth is likely to be limited more by the available radio spectrum rather than by saturated demand. This is because telephone terminals are increasingly being connected to their respective networks by radio links. Whether the intention is to provide the user with unrestricted mobility (mobile service), or merely to give him the freedom of a restricted range of movement (cordless phone) the technical requirements have in common the need to restrict the use of bandwidth on the radio path in order to accommodate large numbers of users.

In an attempt to maximise the use of available bandwith two emerging standards have been proposed. These standards are known respectively as GSM and DECT. GSM stands for Group Speciale Mobile and DECT stands for Digital European Cordless Telephony and is a standard being developed for ETSI.

The paper GSM Protocol Architecture: Radio Subsystem Signalling by Marie-Bernadette Pautet and Michel Mouly - 41st Vehicular Technology Conference - May 1991, St. Louis, US describes the radio sub-system signalling of the GSM ("Global System for Mobile Communication"), i.e. its scope covers the air interface, the Abis interface (between a radio transceiver equipment ("BTS") and a base station controller ("BSC") and the A interface (between a BSC and the switch).

GSM achieves its efficiency at the air interface by taking a short sample of speech and analysing it and then sending data which will allow this burst to be reconstituted. The DECT standard proposed by ETSI has a very similar format. It has currently been proposed that in utilising either of these two standards a number of encoded speech channels will be multiplexed at the A interface between the base station and the mobile switching centre (MSC). The multiplexed signal would then be converted to a 64 kb/s format at the interface between the MSC and the public network to which the MSC is connected.

There are a number of drawbacks to this proposal. Firstly in order to carry it out conversion equipment will be required at entry to and exit from the fixed network. This conversion equipment will almost certainly have to be from a common pool. Secondly there will be a time delay of around 100 ms per round trip due to the requirement for decoding and subsequent encoding. Thirdly the trunk network loses the bandwidth advantage of the GSM coding.

The present invention is concerned with alleviating the above mentioned disadvantages.

Accordingly from a first aspect the present invention comprises a speech transmission network having a plurality of nodes where transmission between certain nodes is via a predetermined telephony standard, the network comprising a plurality of mobile stations capable of receiving and transmitting over radio links speech which has been analysed to provide data strings of a predetermined length from which the speech signal can be reconstituted, a base station for communicating with the mobile stations over the radio links and connected by a link to a mobile switching centre and characterised in that packetising means are provided between each base station and the respective mobile switching centre whereby in transmissions by the link the individual data strings are packetised for transmission across the communication network to another, recipient, node without conversion to the predetermined telephony standard if the recipient node can reconstitute the speech directly from the data strings.

In accordance with a feature of the invention where the recipient node does not include means capable of reconstituting the speech from the data strings, means are provided whereby conversion to the predetermined telephony standard is carried out at the latest possible point in the network.

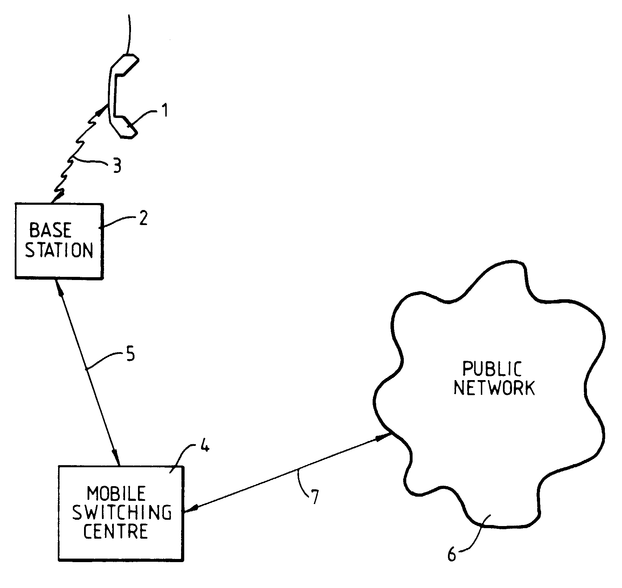

In order that the present invention may be more readily understood Figure 1 of the accompanying drawings is a simple diagram showing the relationship between a cordless telephone and a public network.

Referring now the single figure of the drawing, this shows a mobile station in the form of cordless telephone 1 associated with a base station 2 over a radio link indicated at 3. The base station 1 is connected to a mobile switching centre (MSC) 4 via a link 5 and the mobile switching centre (MSC) 4 is in turn connected to a public network 6 via a link indicated at 7. It will appreciated that the base station 2 is only one of several which would in normal instances be connected to the mobile switching centre 4. The public network 6 will have a plurality of nodes to which the speech data will be transmitted, and the MSC 4 provides one of these nodes. It is anticipated that the public network 6 will be at least partly capable of operating what is known as asynchronous transfer mode or ATM. In ATM capacity is allocated on demand to different users in fixed amounts called "cells". The emerging standard for this service specifies a payload of 48 bytes of information per cell.

For the purpose of the present description it will be assumed that communication between the cordless telephone 1 and the base station 2 utilises the standard known as GSM. This standard operates by taking a 20 ms sample of speech and analysing it to form data strings. Each of these strings is in the form of 267 bits (including Cyclic Redundancy Check bits (CRC)). Each such string allows the short 20 ms burst of speech to be reconstituted. As already mentioned the current proposal for a GSM network is to multiplex a number of encoded speech channels at the A interface between the base station and the mobile switching centre and then to convert to a known telephony standard at the interface between the MSC and the public network 6. In the present embodiment this standard has a 64 kb/s format.

However the present invention proposes that since the speech data encoded in accordance with GSM is of a quantity and form that would fit comfortably into an ATM cell, the conversion to a continuous bit stream, and in particular the conversion to 64 kb/s format, should be performed only when the capabilities of the network to be used make it essential. This is in contradistinction from what has already been proposed. Accordingly in the embodiment shown in Figure 1 the link 5 between the base station 2 and mobile switching centre 4 is operated as an ATM link and the data strings produced by the GSM coding are packetised into an ATM format. An advantage of this arrangement is that by using either add/drop multiplexers, or a metropolitan area network (MAN), preferably using DQDB protocol, a string of base stations such as base station 2 could all be connected very efficiently to the mobile switching centre.

It will also be appreciated that any operator of a mobile network will wish to maximise his handling of the traffic. Thus he will hand over calls destined for the fixed network as near as possible to the destination. Where both parties to a call are directly connected to his network he will obviously want to complete the whole call. Traffic of this kind will thus pass directly between linked mobile switching centres thus the proposal to avoid automatic conversion to a 64 kb/s format will enable this traffic to be handled efficiently in its GSM coded form for which ATM is eminently suitable. Where there are a number of different mobile operators it will be necessary for them to reach agreement to avoid unnecessary conversions to and from the 64 kb/s format and to use ATM bridges between their networks.

The proposal is particularly advantageous if a call from a mobile station can be recognised at call set-up time as terminating on another mobile. This would require a small addition to the repertoire of the emerging signalling standards. Thus where a GSM or other coded signal call is being set it will be necessary for the signalling protocol to identify the call as such. There are a number of very great advantages to be gained in keeping the speech in its encoded form throughout wherever this is possible.
(1) Avoiding the use of conversion equipment (from a common pool) at entry to and exit from the fixed network.
(2) Saving the time delay of a decode and subsequent encode (of the order of 100 ms round trip).
(3) Using only a fraction of the bandwidth on the trunk portion of the call.
(4) Good fit to ATM infrastructure, without needing special measures to fill cells.
In general terms the advantages of the invention just described become particularly relevant when ATM has achieved good penetration in telephony networks and in particular the PSTN. It will also be appreciated that whilst the foregoing description has been given with regard to GSM coding of the original speech data that the present invention is equally applicable to DECT coding and for the purposes of this specification a DECT-standard cordless phone working to a suitable in-house base station counts as a mobile phone.

## Claims

1. A speech transmission network having a plurality of nodes where transmission between certain nodes is via a predetermined telephony standard, the network comprising a plurality of mobile stations (1) capable of receiving and transmitting over radio links (3) speech which has been analysed to provide data strings of a predetermined length from which the speech signal can be reconstituted, a base station (2) for communicating with the mobile stations (1) over the radio links (3) and connected by a link (5) to a mobile switching centre (4) and characterised in that packetising means are provided between each base station and the respective mobile switching centre whereby in transmissions by the link (5) the individual data strings are packetised for transmission across the communication network to another, recipient, node without conversion to the predetermined telephony standard if the recipient node can reconstitute the speech directly from the data strings.

2. A speech transmission network as claimed in Claim 2, wherein, where a recipient node does not include means capable of reconstituting the speech from the data strings, means are provided whereby conversion to the predetermined telephony standard is carried out at the last possible point in the network.

3. A speech transmission network as claimed in Claim 1 or 2, wherein the certain nodes between which transmission is via a predetermined telephony standard comprise a public switched network.

## Patentansprüche

1. Ein Sprachübertragungsnetz, das menrere Knoten aufweist, wobei die Übertragung zwischen bestimmten Knoten über eine vorgegebene Fernsprechnorm läuft, wobei das Netz mehrere mobile Stationen (1) aufweist, die in der Lage sind, über Funkverbindungen (3) Sprache zu empfangen und zu übertragen, die so analysiert worden ist, daß sie Datenketten einer vorgegebenen Länge liefert, aus welchen die Sprachsignale wiederhergestellt werden können; eine Basisstation (2), zur Kommunikation mit den mobilen Stationen (1) über die Funkverbindung (3); und das durch eine Verbindung (5) mit einer mobilen Vermittlungssteile (4) verbunden ist und
**dadurch gekennzeichnet,**
ist, daß zwischen jeder Basisstation und der jeweiligen mobilen Vermittlungsstelle Pakettiereinrichtungen vorgesehen sind, durch welche bei Übertragungen über die Verbindung (5) die einzelnen Datenketten für die Übertragung über das Kommunikationsnetz zu einem anderen, empfangenden Knoten ohne Umwandlung in die vorgegebene Fernsprechnorm pakettiert werden, falls der empfangende Knoten die Sprache direkt aus den Datenketten wiederherstellen kann.

2. Ein Sprachübertragungsnetz nach Anspruch 1, bei welchem da, wo ein empfangender Knoten keine Einrichtungen aufweist, die in der Lage sind, die Sprache aus den Datenketten wiederherzustellen, Einrichtungen vorgesehen sind, durch welche die Umwandlung in die vorgegebene Fernsprechnorm an dem letztmöglichen Punkt in dem Netz ausgeführt wird.

3. Ein Sprachübertragungsnett nach Anspruch 1 oder 3, wobei die bestimmten knoten, zwischen welchen die Übertragung in einer vorgegebenen Fernsprechnorm läuft, ein offentliches Wählnetz umfassen.

## Revendications

1. Réseau de transmission de paroles ayant plusieurs noeuds, dans lequel la transmission entre certains des noeuds s'effectue à l'aide d'une norme téléphonique prédéterminée, le réseau comprenant plusieurs stations mobiles (1) qui peuvent recevoir et émettre par des liaisons radioélectriques (3) des paroles qui ont été analysées pour la formation de chaînes de données de longueur prédéterminée à partir desquelles le signal de parole peut être reconstitué, et une station de base (2) destinée à communiquer avec les stations mobiles (1) par les liaisons radioélectriques (3) et connectée par une liaison (5) à un centre (4) de commutation de stations mobiles, caractérisé en ce qu'un dispositif de mise en paquets est placé entre chaque station de base et le centre respectif de commutation de stations mobiles de manière que, dans les transmission par la liaison (5), les chaînes individuelles de données soient mises en paquets pour être transmises par le réseau de communications vers un autre noeud réceptionnaire sans conversion à la norme téléphonique prédéterminée si le noeud réceptionnaire peut reconstituer les paroles directement à partir des chaînes de données.

2. Réseau de transmission de paroles selon la revendication 1, dans lequel, lorsqu'un noeud réceptionnaire ne contient pas de dispositif capable de reconstituer la parole à partir de chaînes de données, un dispositif est tel que la conversion à la norme téléphonique prédéterminée est réalisée au dernier moment possible dans le réseau.

3. Réseau de transmission de paroles selon la revendication 1 ou 2, dans lequel certains noeuds entre lesquels la transmission s'effectue par une norme téléphonique prédéterminée comprennent un réseau public commuté.
